# EUROPÄISCHE PATENTSCHRIFT

(11) **EP 1 205 097 B1**
(45) Veröffentlichungstag und Bekanntmachung des Hinweises auf die Patenterteilung: **03.01.2007**
(21) Anmeldenummer: 01126153.4
(22) Anmeldetag: 03.11.2001
(51) Int. Cl.: A01B 59/042, B60D 1/00

(54) **Selbstnivellierender Zusammenbau von Gabelkopf und Zugvorrichtung**
Self-levelling forkhead and towing device unit
Unité autonivelleuse de timon et bout en chape

(30) Priorität: 08.11.2000 US 709002
(43) Veröffentlichungstag der Anmeldung: 15.05.2002
(73) Patentinhaber: DEERE & COMPANY, Moline, Illinois 61265-8098 (US)
(72) Erfinder: Friesen, Henry, Niagara Falls, Ontario, L2J 2M7 (CA)
(74) Vertreter: Magin, Ludwig Bernhard

(56) Entgegenhaltungen:
- WO-A-95/18722
- DE-C- 613 541
- DE-C- 917 353
- FR-A- 898 529
- US-A- 1 615 630

## Beschreibung

Die Erfindung betrifft zum einen ein gezogenes Arbeitsgerät mit einer Zugvorrichtung, die an einem hinteren Ende schwenkbar mit einem Arbeitsgerätrahmen verbunden ist und an einem vorderen Ende einen als Koppelkugel-Gabelkopf ausgebildeten Gabelkopf mit einem oberen und einem unteren Gabelkopfsegment zur Anbindung an eine Anbauvorrichtung eines Zugfahrzeugs, insbesondere eines Schleppers, aufweist, die Zugvorrichtung ein oberes und ein unteres Armsegment enthält, die voneinander separiert sind, wobei jedes Armsegment ein hinteres Ende enthält, das schwenkbar für Drehbewegungen um eine horizontale Achse an dem Arbeitsgeräterahmen angelenkt ist, und wobei jedes Armsegment ein vorderes Ende enthält, das schwenkbar an dem Gabelkopf angelenkt ist, derart dass das obere und untere Armsegment ein paralleles Gestänge bilden, wobei die Zugvorrichtung selbstnivellierend ist, zum anderen einen Gabelkopf für eine Zugvorrichtung eines gezogenen Arbeitsgerätes.

Schleppergezogene Arbeitsgeräte, wie z. B. ein gezogenes Rotations-Schneidegerät, insbesondere ein Sichelmäher, benötigen eine Zugvorrichtung, um an die Anbauvorrichtung eines Schleppers derart gekoppelt werden zu können, dass Drehbewegungen in drei Richtungen (Schwenken, Kippen und Neigen) gewährt werden. Um Neigen zu ermöglichen bedarf es eines horizontalen Drehzapfens, der seinerseits eine Abwärtsbewegung des Gabelkopfs ermöglicht, was jedoch Verspannungen und einen überhöhten Verschleiß des Gabelkopfes bzw. der Anbauvorrichtung hervorruft. Verspannungen können zudem frühzeitige Defekte im Antriebsstrang verursachen. Zwei Ausführungsbeispiele, in denen dieses Problem angesprochen wird, sind jeweils in den Patentanmeldungen US 3,998,471 und US 5,386,680 offenbart.

An einigen Schneidgeräten sind zwischen der Mähvorrichtung und dem Gabelkopf drehbare Verbindungselemente derart befestigt, dass die Zugvorrichtung als paralleles Gestänge ausgebildet ist und sich der Gabelkopf selbst nivelliert, sobald das Schneidgerät angehoben oder abgesenkt wird. Dieses System berücksichtigt jedoch außerhalb eines gegebenen Spiels zwischen Zugzapfen und Gabelkopfschlitz keine Drehbewegungen während des Kippens oder Neigens. Des Weiteren treten mit dieser Selbstnivellierung weiterhin Drehbewegungen an der Anbauvorrichtung auf, die zum Verschleiß der Anbauvorrichtung führen.

Die US 1 615 630 A offenbart eine Zugvorrichtung für ein Arbeitsgerät, mit einem Parallelogrammgestänge. An das Parallelogrammgestänge ist eine Zuggabel angeordnet, die einen vertikal ausgerichteten Zugbolzen aufnimmt. Über das Parallelogrammgestänge kann ein Niveauausgleich nur in vertikaler Richtung zwischen Arbeitsgerät und Zugbolzen stattfinden.

Die DE 613 541 C offenbart eine Gabelkopf-Zugvorrichtung mit einem Parallelogrammgestänge, welches sich zwischen dem Gabelkopf und einem Anbaugeräterahmen erstreckt. Durch Bewegung des Parallelogrammgestänges kann ein Niveauausgleich zwischen Gabelkopf und Anbaugeräterahmen erzielt werden. Drehbewegungen des Gabelkopfes sind nur sehr begrenzt möglich.

Die FR 898 592 A offenbart einen Gabelkopf mit einer Koppelkugel, die in einer Zugvorrichtung zwischen zwei Spannblechen gehalten wird. Die Koppelkugel weist dabei eine feste nicht lösbare Verbindung mit einer Anbauvorrichtung auf. Nachteilig wirkt sich aus, dass die Koppelkugel lediglich durch die Spannkraft gehalten wird und dadurch die Verbindung zwischen Koppelkugel und Zugvorrichtung nur geringen Zugkräften standhalten kann.

Die der Erfindung zugrunde liegende Aufgabe wird darin gesehen, eine verbesserte Gabelkopf-Zugvorrichtung der eingangs genannten Art derart auszubilden, dass Drehbewegungen in drei Richtungen realisiert werden können, wobei sowohl Schwenken ermöglicht wird, als auch Kipp- und Neigebewegungen zugelassen bzw. ausgeglichen werden können, ohne dass ein Verschleiß der Anbauvorrichtung des Schleppers bzw. der Gabelkopf-Schlepper-Verbindung infolge dieser Drehbewegungen auftritt und somit einige oder alle der vorgenannten Probleme überwunden werden.

Die Aufgabe wird erfindungsgemäß durch die Lehre des Patentanspruchs 1 bzw. 5 gelöst. Weitere vorteilhafte Ausgestaltungen und Weiterbildungen der Erfindung gehen aus den Unteransprüchen hervor.

Erfindungsgemäß wird ein gezogenes Arbeitsgerät der Eingangs genannten Art derart ausgebildet, dass das obere und das untere Armsegment von ihrem hinteren Ende aus nach vorne hin an dem Koppelkugel - Gabelkopf zusammenlaufen, wobei die vorderen Enden der Armsegmente jeweils einzeln schwenkbar am Gabelkopf befestigt sind und wobei das vordere Ende des oberen Armsegments an das obere Gabelkopfsegment und das vordere Ende des unteren Armsegments an das untere Gabelkopfsegment gekoppelt sind.

Der Gabelkopf der Zugvorrichtung ist so ausgebildet, dass er aus einem oberen und untere Segment besteht, zwischen denen eine Koppelkugel enthalten ist, wobei die Gabelkopfsegmente durch Verbindungselemente verspannt werden und in einer anhaltenden Verknüpfung zur Koppelkugel gehalten werden.

Die vorderen Enden der Gabelkopfsegmente sind vorzugsweise ringförmig ausgebildet und komplementär zur Oberfläche der Koppelkugel geformt. Dabei sind die Gabelkopfsegmente so angeordnet, dass sie die Koppelkugel umschließen und einen Lagersitz bilden, in dem die Koppelkugel sich um drei Achsen verdrehen kann.

Zur Aufnahme der Anbauvorrichtung ist die Koppelkugel mit einer Öffnung versehen in die beispielsweise das Zugpendel eingebracht werden kann, wobei Bohrungen vorgesehen sind, in denen ein Zugzapfen geführt wird.

Durch den selbstnivellierenden Gabelkopf sind keine separaten Verbindungselemente zum Aufrechterhalten des Gabelkopfniveaus erforderlich.

Durch die separaten Arme, die zwischen dem Rahmen des gezogenen Arbeitsgerätes und dem Gabelkopf angeordnet sind, wird ein paralleles Gestänge zur Haltung einer Niveaustellung des Gabelkopfes definiert.

Der selbstnivellierende Gabelkopf ermöglicht Drehbewegungen in drei Richtungen an seiner Verbindungsstelle zur Anbauvorrichtung.

Des Weiteren wird in einer vorzugsweisen Ausführung der Erfindung, entsprechend der vorangehend dargelegten Ausführung, ein Zusammenbau von Zugvorrichtung und selbstnivellierendem Gabelkopf vorgeschlagen, worin der Gabelkopf obere und untere Hälften mit gegenüberliegenden Oberflächen aufweist, die komplementär zu einer Koppelkugel ausgebildet sind und diese umfassen. Die Koppelkugel enthält eine Bohrung für einen vertikal angeordneten Zugzapfen sowie eine zur Aufnahme der Aufnahmevorrichtung des Schleppers angebrachte horizontale Öffnung, wobei die Koppelkugel eine Oberfläche liefert, mit der der Gabelkopf in drei Richtungen schwenkbar ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine linksseitige perspektivische Ansicht einer selbstnivellierenden Zugvorrichtung, die sich zwischen einer Anbauvorrichtung eines Schleppers und der Vorderseite eines Arbeitsgerätes erstreckt,
- Fig. 2: eine vorderseitige perspektivische Ansicht der Zugvorrichtung,
- Fig. 3: eine rechtsseitige perspektivische Ansicht des vorderen Endes der Zugvorrichtung mit einem an eine Anbauvorrichtung eines Schleppers gekoppelten Koppelkugel-Gabelkopf,
- Fig. 4: eine linksseitige Ansicht der selbstnivellierenden Zugvorrichtung und
- Fig. 5: eine rückseitige Ansicht der selbstnivellierenden Zugvorrichtung.

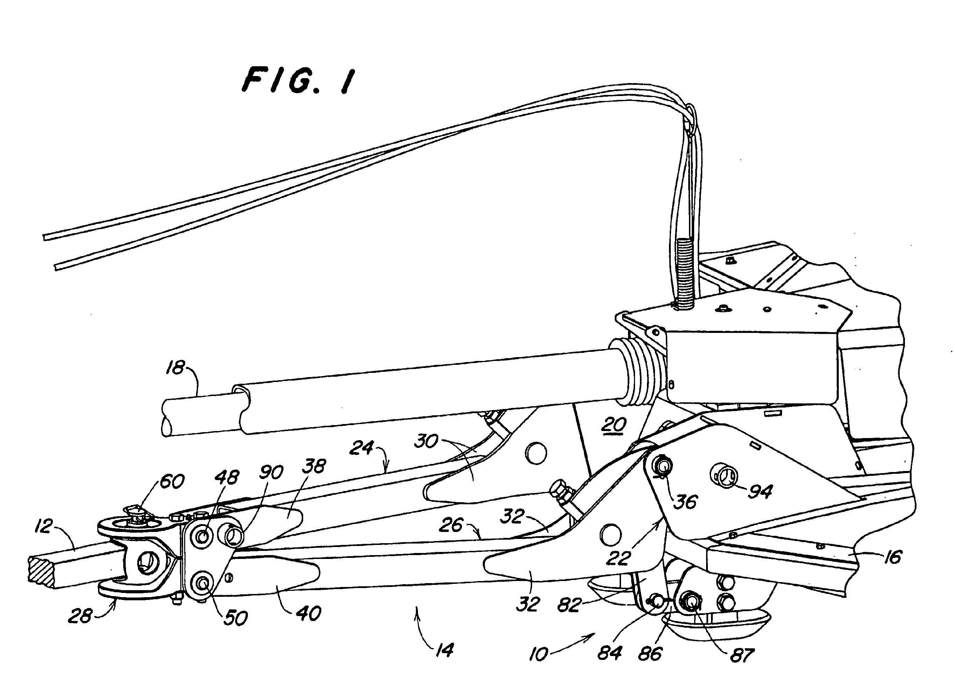

In Fig. 1 ist ein vorderer Teil eines gezogenen Arbeitsgerätes, hier als Rotations-Schneidegerät 10 gezeigt, ein Zugpendel 12 eines Schleppers (nicht gezeigt) und eine Schneidgerät-Zugvorrichtung 14, die das Schneidegerät 10 mit der Zugpendel 12 verbindet, dargestellt. Zur Kraftübertragung von einer Zapfwelle (nicht gezeigt) am hinteren Ende eines Schleppers zu einer Antriebswelle (nicht gezeigt) eines Getriebes ist eine geschützte, teleskopische Antriebswelle 18 vorgesehen. Das Getriebe ist auf der Oberseite eines Rahmens 16 des Rotations-Schneidegerätes 10 angeordnet und dient der Verteilung der Antriebskräfte zum Antrieb der Schneidemesser (nicht gezeigt).

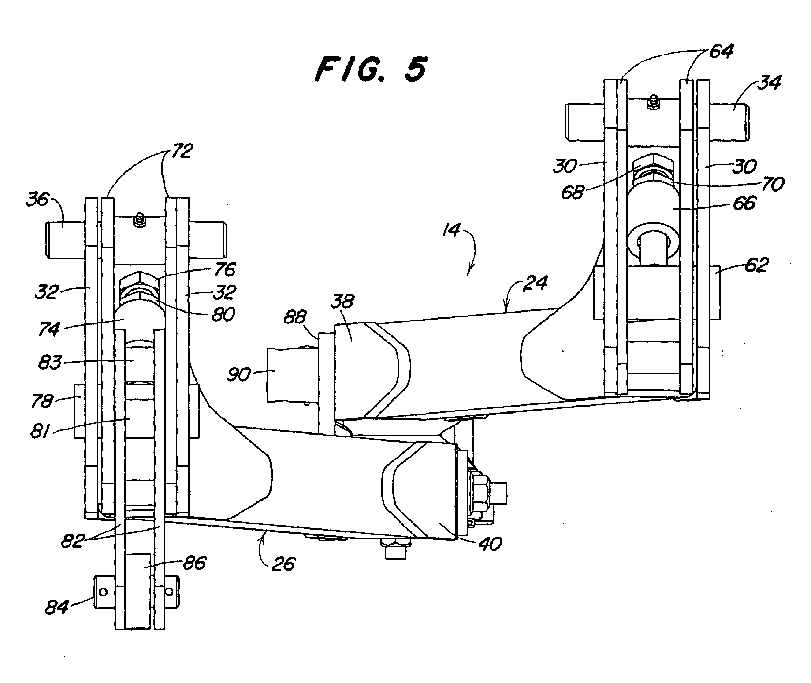

Rechter und linker Hand sind quer zueinander beabstandete, senkrechte Einbauträger 20, 22 für die Zugvorrichtung an entsprechende Stellen angeschweißt, die sich äquidistant zu einer längslaufenden, vertikalen Mittelebene des Schneidegerätes 10 an der Oberseite des Rahmens 16 befinden, wobei jeder der Einbauträger 20, 22 die Form von quer zueinander beabstandeten parallelen Platten aufweist. Die Zugvorrichtung 14 enthält separate obere und untere Armsegmente 24, 26, die an ihren jeweils hinteren Enden vertikal schwenkbar an die Einbauträger 20, 22 gekoppelt sind, von denen aus die Armsegmente 24, 26 nach vorne hin (siehe auch Fig. 5) an einem Koppelkugel-Gabelkopf zusammenlaufen, wobei die vorderen Enden der Armsegmente 24, 26 jeweils einzeln schwenkbar am Koppelkugel-Gabelkopf befestigt sind.

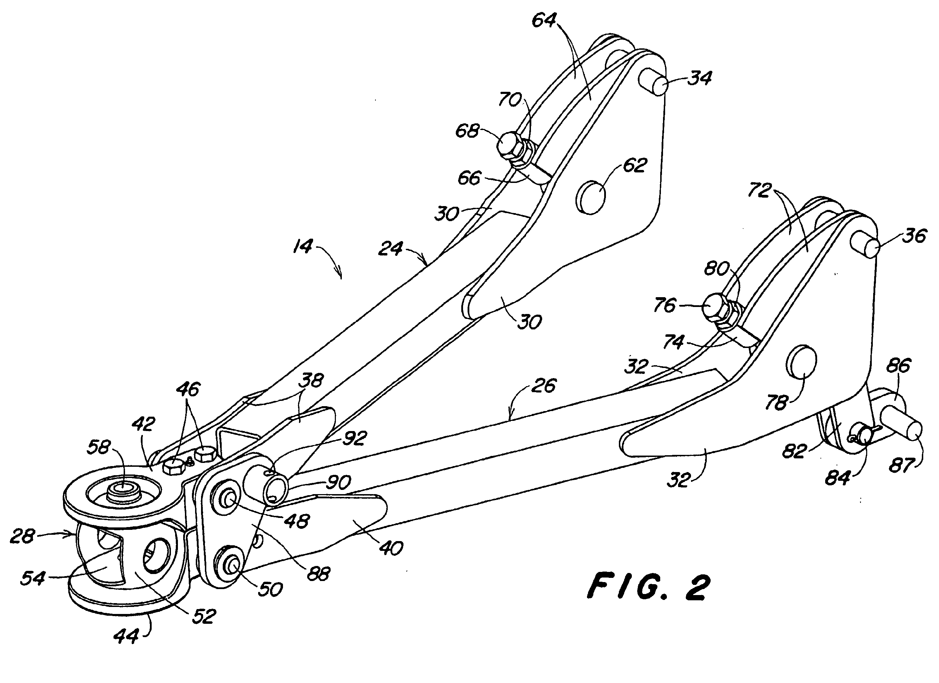

Insbesondere geht aus Fig. 2 hervor, dass die hinteren Enden der Armsegmente 24, 26 den hinteren Verbindungsteilen 30, 32 entsprechend ausgebildet sind, von denen jedes die Form eines Paares von zueinander beabstandeten, senkrechten, im wesentlichen dreieckförmigen Platten besitzt. Das Verbindungsteil 30 ist zwischen einer oberen vorderen Stelle der Platten des Einbauträgers 20 angebracht, wobei das Verbindungsteil 30 eine obere hintere Ecke enthält, die schwenkbar mittels eines Querbolzens 34 mit dem Einbauträger 20 verbunden ist. Ähnlich dazu, ist das Verbindungsteil 32 zwischen einer oberen vorderen Stelle der Platten des Einbauträgers 22 angebracht, wobei das Verbindungsteil 32 eine obere hintere Ecke enthält, die schwenkbar mittels eines Querbolzens 36 mit dem Einbauträger 22 verbunden ist.

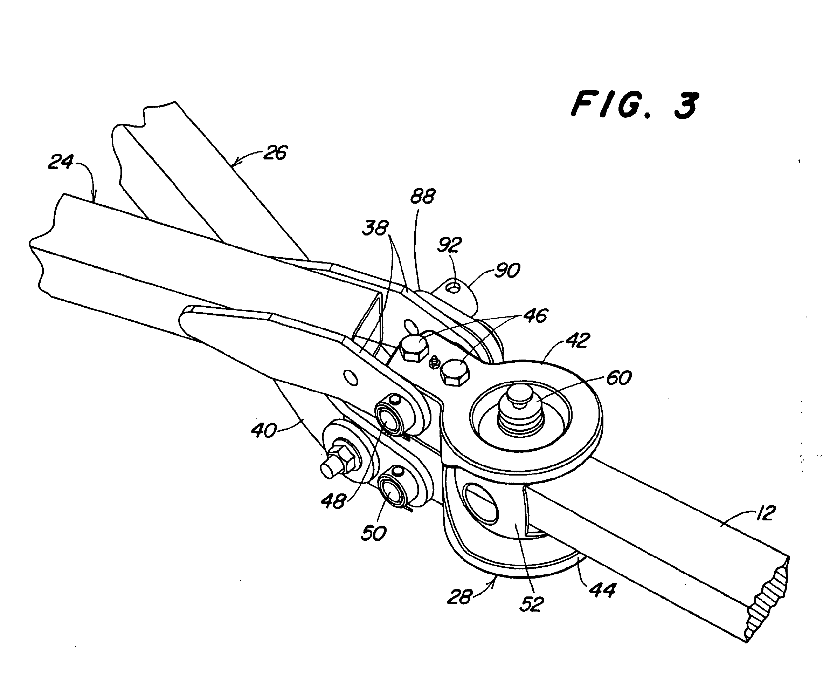

Aus Fig. 3 wird deutlich, dass die vorderen Enden der Armsegmente 24, 26 entsprechend vorderer Verbindungsteile 38, 40 ausgebildet sind, von denen jedes die Form eines Paares zueinander beabstandeter Laschen besitzt, wobei die Laschen des Verbindungsteils 38 in vertikaler Ausrichtung oberhalb der Laschen des Verbindungsteils 40 angeordnet sind.

Der Gabelkopf 28 ist aus zwei identischen oberen und unteren Hälften 42 und 44 gefertigt, die jeweils ein ringförmiges vorderes Ende und ein blockförmiges hinteres Ende aufweisen. Die Gabelkopfhälften 42, 44 sind durch zwei Verbindungsbolzen 46 miteinander verspannt, wobei die Verbindungsbolzen 46 hintereinander angeordnet sind und sich vertikal durch das blockförmige hintere Ende der Gabelkopfhälften 42, 44 erstrecken. Die Laschen des dem oberen Armsegment 24 zugeordneten vorderen Verbindungsteils 38 liegen beiderseits des oberen Armsegments 24 und sind durch einen horizontal angeordneten Drehzapfen 48 schwenkbar an das blockförmige Ende der oberen Hälfte 42 des Gabelkopfes 28 gekoppelt, wobei der Drehzapfen 48 in einer Bohrung, die zwischen dem Verbindungsbolzenpaar 46 liegt, in der oberen Gabelkopfhälfte 42 angebracht ist. Ähnlich dazu liegen die dem unteren Armsegment 26 zugeordneten Laschen des vorderen Verbindungsteils 40 beidseitig des unteren Armsegments 26 und sind durch einen horizontal angeordneten Drehzapfen 50 schwenkbar an das blockförmige Ende der unteren Hälfte 44 des Gabelkopfes 28 gekoppelt, wobei der Drehzapfen 50 vertikal unter dem Drehzapfen 48 angeordnet ist. Hierbei ist zu erwähnen, dass das linke Ende jedes Drehzapfens 48, 50 einen Zapfenkopf enthält, der als eine an den Schaft des Drehzapfens 48, 50 angeschweißte Scheibe ausgebildet ist.

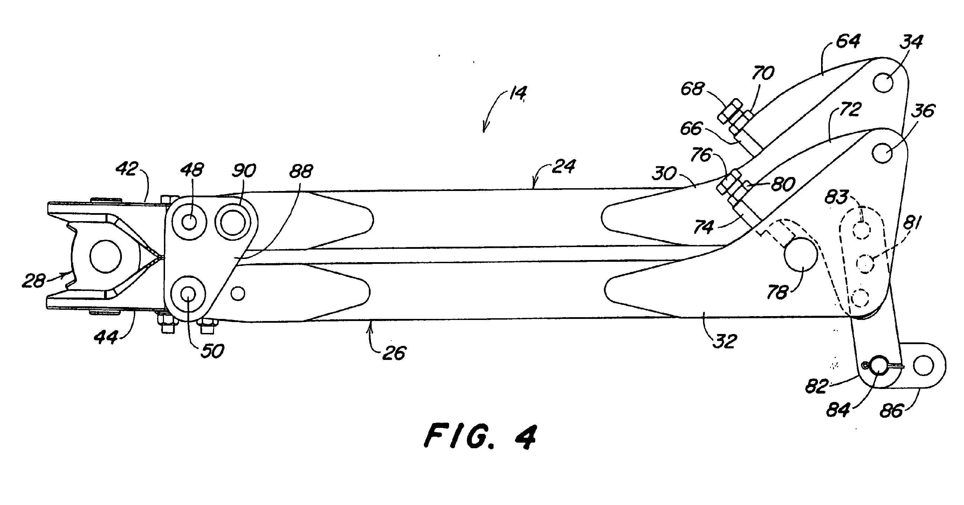

Wie aus Fig. 4 ersichtlich, weisen die Querbolzen 34 und 36, die der Ankopplung der hinteren Enden der oberen und unteren Armsegmente 24 und 26 an die Einbauträger 20 und 22 dienen, in vertikaler Hinsicht den gleichen Abstand zueinander auf wie die Drehzapfen 48 und 50, die jeweils die vorderen Enden der Armsegmente 24, 26 an die Gabelkopfhälften 42, 44 koppeln. Dadurch wird erreicht, dass die separaten Armsegmente 24 und 26 ein paralleles Gestänge bilden, was dazu führt, dass ein gleichbleibendes Niveau des Gabelkopfes 28 während der vertikalen Drehbewegung der Armsegmente 24 und 26 bei Betrieb des Schneidegerätes 10 auf unebenen Terrain gewährleistet werden kann.

Aus Fig. 2 und Fig. 3 wird deutlich, dass die ringförmig ausgebildeten vorderen Enden der Gabelkopfhälften 42 und 44 jeweils an oberen bzw. unteren Bereichen einer Kugel 52 angreifen. Die Gabelkopfhälften 42 und 44 sind mit jeweils kugelförmig ausgebildeten Oberflächenbereichen (nicht gezeigt) versehen, die jeweils komplementär zu den jeweiligen äußeren Oberflächenbereichen der Kugel geformt sind, so dass die Kugel durch die Gabelkopfhälften 42, 44 umschlossen wird, wobei durch eine ausreichend lockere Passform die Gabelkopfhälften 42, 44 über die Kugeloberfläche gleiten können. Die Kugel 52 enthält eine Öffnung 54, die im Querschnitt rechteckig ist und den hinteren Teil des Zugpendels 12 des Schleppers aufnimmt. Das Zugpendel 12 ist mit einer vertikalen Bohrung versehen, die mit einer sich vertikal durch die Kugel erstreckenden Bohrung 58 fluchtet. Ein Verbindungsbolzen 60, der von den beiden fluchtenden Bohrungen aufgenommen wird, verbindet die Zugvorrichtung 14 mit dem Schlepper und stellt eine vertikale Achse dar, um die die Zugvorrichtung 14 schwenken kann.

Aus Fig. 1, Fig. 2 und Fig. 5 ist ersichtlich, wie der Aufbau zum Anheben oder Absenken des Gabelkopfes 28 realisiert wird, um durch individuelle Krafteinleitung zum Heben oder Senken der Armsegmente 24 und/oder 26 um die Drehzapfen 48 und 50 einen Ausgleich für unterschiedlich hohe Anhängevorrichtungen zu schaffen. Insbesondere ist zwischen den Laschen, die das Verbindungsteil 30 des oberen Armsegmentes 24 der Zugvorrichtung 14 bilden, eine sich horizontal erstreckende Stange angeschweißt, die einen Anschlag 62 darstellt. Ein Winkelhebel 64, in Form von zwei parallelen, im wesentlichen dreieckförmigen Platten, enthält einen ersten Eckabschnitt, der drehbar um den Querbolzen 34 montiert ist, und einen vorderen Eckabschnitt, in welchem die beidseitigen Platten an ein zylindrisches Gewinderohr 66 geschweißt sind, welches eine Stellschraube 68 aufnimmt, deren unteres Ende an den Anschlag 62 stößt. Die Stellschraube 68 enthält eine Kontermutter 70, mit der sie sich in einer gewünschten Feststellposition feststellen lässt. Der Winkelhebel 64 enthält einen unteren hinteren Eckbereich, der drehbar mit einer Gabel verbunden ist, die ein vorderes Ende einer sich längs erstreckenden Ausgleichsstange (nicht gezeigt) bildet. Die Ausgleichsstange enthält ein hinteres Ende, das drehbar mit einem an einer Querachse für Räder (nicht gezeigt) angebrachten Henkel verbunden ist, wobei die Querachse drehbar mit einem hinteren Bereich des Rahmens 16 verbunden ist und die Ausgleichsstange durch einen Hydraulikmotor oder dergleichen in einer gewünschten Position gehalten wird. Somit wird es aus Fig. 2 verständlich, dass durch Herausdrehen der Stellschraube 68 eine Abwärtsbewegung des Anschlages 64 um den Querbolzen 34 ermöglicht wird und dadurch ein Anheben der Zugvorrichtung 28 aus der dargestellten Position zugelassen wird. Ein Absenken der Zugvorrichtung hingegen wird durch Hereindrehen der Stellschraube 68 erreicht, so dass die Stellschraube 68 in einer tieferen Position auf den Anschlag 62 trifft.

Ähnlich dazu, ist ein Winkelhebel 72, in Form von zwei parallelen, im wesentlichen dreieckförmigen Platten ausgebildet, der einen ersten Eckabschnitt, der drehbar um den Querbolzen 36 montiert ist, und einen vorderen Eckabschnitt enthält, in welchem die beidseitigen Platten an ein zylindrisches Gewinderohr 74 geschweißt sind, welches eine Stellschraube 76 aufnimmt, deren unteres Ende an einen Anschlag 78 stößt. Der Anschlag besteht aus einer sich horizontal erstreckenden Stange, die zwischen den Laschen, die das Verbindungsteil 32 des unteren Armsegmentes 26 der Zugvorrichtung 14 bilden, angeschweißt ist. Die Stellschraube 76 enthält eine Kontermutter 80, mit der sie sich in einer gewünschten Feststellposition feststellen lässt. Der Winkelhebel 72 enthält einen unteren hinteren Eckbereich, der mit zwei vertikal übereinander angeordneten Bohrungen versehen ist, von denen eine Bohrung einen Bolzen 81 aufnimmt. Der Bolzen 81 ist dabei zwischen dem Plattenpaar, das den Schalthebel 72 bildet, eingepasst und verbindet den Schalthebel 72 drehbar mit einem Bindeglied 82, welches durch ein parallel angeordnetes Laschenpaar gebildet wird. Das Laschenpaar besitzt eine oberes Ende, welches über dem Bolzen 81 liegt und mittels eines Bolzens 83 mit einer Gabel verbunden ist, die ein vorderes Ende einer sich längs erstreckenden Ausgleichsstange (nicht gezeigt) bildet. Die Ausgleichsstange enthält ein hinteres Ende, das drehbar mit einem an einer Querachse für Räder (nicht gezeigt) angebrachten Henkel verbunden ist, wobei die Querachse drehbar mit einem hinteren Bereich des Rahmens 16 verbunden ist. Hierbei sei vermerkt, dass der Bolzen 83 zwischen dem Plattenpaar, das den Steuerhebel 72 bildet, eingepasst wird, und auf einem nahezu gleichen Niveau wie die Verbindung zwischen dem Steuerhebel 64 und der Ausgleichsstange auf dieser Seite angeordnet ist. Das Bindeglied 82 erstreckt sich unterhalb des Bolzens 81 und enthält ein unteres Ende, welches mittels eines Bolzens 84 mit einem sich längs erstreckenden kurzen Bindeglied 86 drehbar verbunden ist. Das kurze Bindeglied 86 ist mit seinem hinteren Ende über einen Bolzen 87 mit weiter unten angeordneten Teilen des Einbauträgers 22 drehbar verbunden. Eine Einstellung der Schraube 76 führt dazu, dass sich das Armsegment 26 der Zugvorrichtung 14 und infolgedessen der Gabelkopf 28 anheben oder absenken lässt, ähnlich dem oben beschriebenen Effekt, der bei einer Justage der Stellschraube 68 eintritt. Es ergeben sich somit zwei justierbare Nivellierungsmechanismen, die jeweils zwischen den hinteren Enden der voneinander separierten Armsegmenten 24, 26 und dem Rahmen 16 angeordnet sind und eine Nivellierung des Rahmens 16 ermöglichen.

Wenn die Zugvorrichtung 14 von der Anbauvorrichtung 12 des Schleppers abgehängt werden soll, kann ein Hebeständer (nicht gezeigt) an den Gabelkopf 28 montiert werden. Für diesen Zweck ist eine dreieckförmige Stützplatte 88 durch die Drehzapfen 48 und 50 links an dem Gabelkopf 28 montiert, wie aus Fig. 1, Fig. 2 und Fig. 4 ersichtlich wird, wobei erwähnt werden sollte, dass die linksseitig am Ende der Drehzapfen 48, 50 angeschweißten, als Scheiben ausgebildete Zapfenköpfe dazu dienen, die Stützplatte 88 festzuhalten. An der hinteren Ecke der Stützplatte 88 ist ein Hebeständermontagerohr 90 angeschweißt, das mit einer Stiftbohrung 92 versehen ist, die dazu dient, ein Montageteil des Halteständers zu befestigen. Von Wichtigkeit ist dabei, dass wegen der Befestigung durch die Drehzapfen 48, 50 die Stützplatte 88 während vertikaler Justagen zur Anpassung unterschiedlich hoher Anbauvorrichtungen eine konstante Stellung beibehält. Das Halteständermontagerohr 90 ist dabei so ausgerichtet, dass der montierte Halteständer eine im wesentlichen vertikale Stellung einnimmt. Linksseitig, an der Platte des Einbauträgers 22, ist ein Montagerohr 94 (siehe Fig. 1) angebracht, das ähnlich dem Montagerohr 92 konstruiert ist und dazu dient, eine Haltevorrichtung zu schaffen, mit der der Halteständer während des Betriebs des Schneidegerätes 10, in einer vorwiegend horizontalen Stellung gelagert wird.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Gezogenes Arbeitsgerät mit einer Zugvorrichtung (14), die an einem hinteren Ende schwenkbar mit einem Arbeitsgerätrahmen (16) verbunden ist und an einem vorderen Ende einen als Koppelkugel-Gabelkopf ausgebildeten Gabelkopf (28) mit einem oberen und einem unteren Gabelkopfsegment (42, 44) zur Anbindung an eine Anbauvorrichtung (12) eines Zugfahrzeugs, insbesondere eines Schleppers, aufweist, die Zugvorrichtung (14) ein oberes und ein unteres Armsegment (24, 26) enthält, die voneinander separiert sind, wobei jedes Armsegment (24, 26) ein hinteres Ende enthält, das schwenkbar für Drehbewegungen um eine horizontale Achse an dem Arbeitsgeräterahmen (16) angelenkt ist, und wobei jedes Armsegment (24, 26) ein vorderes Ende enthält, das schwenkbar an dem Gabelkopf (28) angelenkt ist, derart dass das obere und untere Armsegment (24, 26) ein paralleles Gestänge bilden, wobei die Zugvorrichtung (14) selbstnivellierend ist, **dadurch gekennzeichnet, dass** das obere und das untere Armsegment (24, 26) von ihrem hinteren Ende aus nach vorne hin an dem Koppelkugel-Gabelkopf zusammenlaufen, wobei die vorderen Enden der Armsegmente (24, 26) jeweils einzeln schwenkbar am Gabelkopf (28) befestigt sind und wobei das vordere Ende des oberen Armsegments (24) an das obere Gabelkopfsegment (42) und das vordere Ende des unteren Armsegments (26) an das untere Gabelkopfsegment (44) gekoppelt sind.

2. Gezogenes Arbeitsgerät nach Anspruch 1, **dadurch gekennzeichnet, dass** der Gabelkopf (28) eine Koppelkugel (52) enthält, die mit einer einen Zugbolzen (60) aufnehmenden vertikalen Bohrung (58) zur Anlenkung der Koppelkugel (52) an eine Anbauvorrichtung (12) eines Schleppers versehen ist.

3. Gezogenes Arbeitsgerät nach Anspruch 2, **dadurch gekennzeichnet, dass** das obere und untere Gabelkopfsegment (42, 44) jeweils einen kugelförmig ausgebildeten Oberflächenbereich aufweist und die Oberflächenbereiche die Koppelkugel (52) derart umklammern, dass die Koppelkugel (52) relativ zu den Oberflächenbereichen bewegt werden kann, wobei die Koppelkugel (52) eine Öffnung (54) enthält die zur Aufnahme eines hinteren Endes der Anbauvorrichtung (14) ausgebildet ist.

4. Gezogenes Arbeitsgerät nach einem der vorhergehenden Ansprüche, **dadurch gekennzeichnet, dass** ein Montageglied (88) für einen Hebeständer vorgesehen ist, dass gemeinsam mit den oberen und unteren voneinander separaten Armsegmenten (24, 26) drehbar am Gabelkopf (28) angelenkt ist, derart dass das Montageglied (88) eine konstante Stellung zum Gabelkopf (28) einhält, wenn die Armsegmente (24, 26) angehoben bzw. abgesenkt werden, wobei das Montageglied (88) eine Verbindungseinrichtung (90) enthält, durch die ein Hebeständer in einer im Wesentlichen vertikalen Stellung entlastet gehalten wird.

5. Gabelkopf einer Zugvorrichtung (14) für ein gezogenes Arbeitsgerät (10), mit einem oberen und unteren Gabelkopfsegment (42, 44) sowie einer Koppelkugel (52) und Verbindungselementen (46), wobei die Verbindungselemente (46) die Gabelkopfsegmente (42, 44) in einer verstellbaren Verbindung an der Koppelkugel (52) festhalten, **dadurch gekennzeichnet, dass** die Koppelkugel (52) zur Aufnahme der Anbauvorrichtung (12) eine erste Öffnung (54) und zur Aufnahme eines Befestigungsbolzens (60) eine vertikal angeordnete Bohrung (58) enthält, mit denen sich die Koppelkugel (52) an die Anbauvorrichtung (12) koppeln lässt.

6. Gabelkopf nach Anspruch 5, **dadurch gekennzeichnet, dass** das obere und untere Gabelkopfsegment (42, 44) des Gabelkopfes (28) identisch sind.

7. Gabelkopf (28) nach Anspruch 5 und/oder 6, **dadurch gekennzeichnet, dass** das obere und untere Segment (42, 44) des Gabelkopfes (28) jeweils ein ringförmiges erstes Ende enthält, wobei das obere ringförmige erste Ende in vertikaler Flucht oberhalb des unteren ringförmigen ersten Endes angeordnet ist und die ringförmigen ersten Enden jeweils kugelförmig ausgebildete Oberflächenbereiche aufweisen, die komplementär zu der Oberfläche der Koppelkugel (52) geformt sind und diese umschließen.

## Claims

1. Towed implement having a towing device (14) which is pivotally connected at a rear end to an implement frame (16) and has at a front end a clevis (28) in the form of a ball clevis having an upper and a lower clevis segment (42, 44) for connecting to a hitch (12) of a towing vehicle, especially a tractor, said towing device (14) including an upper and a lower arm segment (24, 26) which are separated from each other, each arm segment (24, 26) including a rear end which is pivotally linked to the implement frame (16) for rotary movements about a horizontal axis, and each arm segment (24, 26) including a front end which is pivotally linked to the clevis (28) in such a way that the upper and lower arm segments (24, 26) form a parallel linkage, the towing device (14) being self-levelling, **characterised in that** the upper and lower arm segments (24, 26) converge from their rear end to the front on the ball clevis, the front ends of the arm segments (24, 26) each being individually pivotally attached to the clevis (28) and the front end of the upper arm segment (24) being coupled to the upper clevis segment (42) and the front end of the lower arm segment (26) to the lower clevis segment (44).

2. Towed implement according to claim 1, **characterised in that** the clevis (28) includes a coupling ball (52) which is provided with a vertical bore (58) receiving a hitch pin (60) for coupling the ball (52) to a hitch (12) of a tractor.

3. Towed implement according to claim 2, **characterised in that** the upper and lower clevis segments (42, 44) each have a spherical surface region and the surface regions clamp round the ball (52) in such a way that the ball (52) can be moved relative to the surface regions, the ball (52) including an opening (54) for receiving a rear end of the hitch (14).

4. Towed implement according to one of the preceding claims, **characterised in that** a jack stand mounting structure (88) is provided which is pivotally linked to the clevis (28) together with the upper and lower separate arm segments (24, 26), in such a way that the mounting structure (88) maintains a constant position relative to the clevis (28) when the arm segments (24, 26) are raised or lowered, the mounting structure (88) including a connection arrangement (90) by which a jack stand is held in a balanced manner in a substantially vertical position.

5. Clevis of a towing device (14) for a towed implement (10), having an upper and a lower clevis segment (42, 44) as well as a ball (52) and connecting elements (46) which hold the clevis segments (42, 44) securely on the ball (52) in an adjustable connection, **characterised in that** the ball (52) contains a first opening (54) for receiving the hitch (12) and a vertically arranged bore (58) for receiving a hitch pin (60) by which means the ball (52) can be coupled to the hitch (12).

6. Clevis according to claim 5, **characterised in that** the upper and lower segments (42, 44) of the clevis (28) are identical.

7. Clevis (28) according to claim 5 and/or 6, **characterised in that** the upper and lower segments (42, 44) of the clevis (28) each have an annular first end, the upper annular first end being arranged above the lower annular first end in vertical alignment with same, and the annular first ends each having spherical surface regions which are shaped complementary to the surface of the ball (52) and enclose same.

## Revendications

1. Machine de travail tractée, comportant un dispositif de traction (14), dont une extrémité arrière est reliée pivotante à un bâti (16) de la machine de travail et dont une extrémité avant comporte une tête en fourche (28), conçue sous forme de tête en fourche à rotule d'attelage et comportant un segment supérieur (42) et un segment inférieur (44) pour le couplage à un dispositif d'attelage (12) d'un véhicule de traction, en particulier un tracteur, le dispositif de traction (14) comporte un bras supérieur (24) et un bras inférieur (26), qui sont séparés l'un de l'autre, chaque bras (24, 26) comportant une extrémité arrière, qui est articulée contre le bâti (16) de la machine de travail pour pouvoir pivoter autour d'un axe horizontal pour effectuer des mouvements de rotation, et chaque bras (24, 26) comportant une extrémité avant qui est articulée de manière pivotante contre la tête en fourche (28), de telle sorte que le bras supérieur (24) et le bras inférieur (26) forment un ensemble de tiges parallèles, le dispositif de traction (14) étant un dispositif avec mise à niveau automatique, **caractérisée en ce que** le bras supérieur (24) et le bras inférieur (26) à partir de leur extrémité arrière convergent vers l'avant contre la tête en fourche à rotule d'attelage, les extrémités avant des bras (24, 26) étant fixées chacune séparément de manière pivotante contre la tête en fourche (28) et l'extrémité avant du bras supérieur (24) étant couplée au segment supérieur (42) et l'extrémité avant du bras inférieur (26) étant couplée au segment inférieur (44).

2. Machine de travail tractée selon la revendication 1, **caractérisée en ce que** la tête en fourche (28) comporte une rotule d'attelage (52), qui est munie d'une forure (58) recevant un boulon de traction (60) et destinée à articuler la rotule d'attelage (52) contre un dispositif d'attelage (12) d'un tracteur.

3. Machine de travail tractée selon la revendication 2, **caractérisée en ce que** les segments supérieur et inférieur (42, 44) de la tête en fourche comportent chacun une zone de surface de forme sphérique et enserrent les zones de surface de la rotule d'attelage (52) de telle sorte que la rotule d'attelage (52) peut bouger par rapport aux zones de surface, la rotule d'attelage (52) comportant une ouverture (54) qui est réalisée pour recevoir une extrémité arrière du dispositif d'attelage (12).

4. Machine de travail tractée selon l'une quelconque des revendications précédentes, **caractérisée en ce qu'**il est prévu un organe de montage (88) pour un support de levage, lequel organe, conjointement avec les bras supérieur et inférieur (24, 26) séparés l'un de l'autre, est articulé de manière rotative contre la tête en fourche (28), de telle sorte que l'organe de montage (88) reste en position constante par rapport à la tête en fourche (28) lorsque les bras (24, 26) sont relevés ou abaissés, l'organe de montage (88) comportant un dispositif d'assemblage (90), par lequel un support de levage peut être maintenu à l'état non sollicité dans une position sensiblement verticale.

5. Tête en fourche d'un dispositif de traction (14) pour une machine de travail tractée (10), comportant un segment supérieur (42) et un segment inférieur (44), les éléments d'assemblage (46) bloquant les segments (42, 44) dans un assemblage réglable avec la rotule d'attelage (52), **caractérisée en ce que** la rotule d'attelage (52) comporte une première ouverture (54), destinée à recevoir le dispositif d'attelage (12), et une forure (58) orientée verticalement et destinée à recevoir un boulon de fixation (60), par lesquelles la rotule d'attelage (52) peut être couplée au dispositif d'attelage (12).

6. Tête en fourche selon la revendication 5, **caractérisée en ce que** le segment supérieur (42) et le segment inférieur (44) de la tête en fourche (28) sont identiques.

7. Tête en fourche (28) selon la revendication 5 et/ou 6, **caractérisée en ce que** le segment supérieur (42) et le segment inférieur (44) de la tête en fourche (28) comportent chacun une première extrémité annulaire, la première extrémité annulaire supérieure étant alignée verticalement au-dessus de la première extrémité annulaire inférieure et les premières extrémités annulaires comportant chacune des zones de surface de forme sphérique qui sont formées de manière complémentaire à la surface de la rotule d'attelage (52) et enserrent celle-ci.
